(19) Europäisches Patentamt / European Patent Office / Office européen des brevets

(11) **EP 4 071 754 A1**

(12) **EUROPEAN PATENT APPLICATION**

(43) Date of publication:
**12.10.2022 Bulletin 2022/41**

(21) Application number: **21167155.7**

(22) Date of filing: **07.04.2021**

(51) International Patent Classification (IPC):
**G10L 15/26** (2006.01)  **G10L 15/01** (2013.01)
**G10L 19/018** (2013.01)  G06F 3/16 (2006.01)
G06N 3/12 (2006.01)

(52) Cooperative Patent Classification (CPC):
**G10L 15/26; G10L 15/01; G10L 19/018;**
G06F 3/167; G06N 3/126

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
 • **Deutsche Telekom AG**
  **53113 Bonn (DE)**
 • **neurocat GmbH**
  **12489 Berlin (DE)**

(72) Inventors:
 • **FISCHER, Sebastian**
  **12621 Berlin (DE)**

 • **HAGEMANN, Tanja**
  **10781 Berlin (DE)**
 • **GREßNER, Florens**
  **10318 Berlin (DE)**
 • **MOTTA, Mariele**
  **10969 Berlin (DE)**
 • **FIRNKORN, Jörg**
  **10969 Berlin (DE)**

(74) Representative: **Vossius & Partner
Patentanwälte Rechtsanwälte mbB
Siebertstraße 3
81675 München (DE)**

Remarks:
Amended claims in accordance with Rule 137(2)
EPC.

(54) **BLACK-BOX OVER-THE-AIR ATTACK ON A SMART SPEAKER**

(57) The invention provides a method for over-the-air attacks on an automated speech recognition device, the method comprising: a) sending an audio file to a speaker; b) receiving retrieving information associated with an over-the-air recording from an automated speech recognition device, wherein the recording is associated with the audio file sent to the speaker; c) evaluating the received recording against a predetermined criterion; d) pertubating the audio file to generate a new audio file if the predetermined criterion is not reached; and e) repeating steps a) to e) with the new audio file until the predetermined criterion is reached.

FIG. 2

**Description**

The present disclosure relates to methods and devices for over-the-air attacks on an automated speech recognition device, in particular black-box over-the-air attack on a smart speaker.

Automatic Speech Recognition (ASR) is an increasingly pervasive technology with security-critical applications such as in car navigation systems, smart home devices, and telephone assistance lines. ASR has undergone substantial improvement, especially since the incorporation of deep neural networks. However, neural networks suffer from a known vulnerability to adversarial examples - inputs crafted with the purpose of misleading the system while going unnoticed by humans. Several techniques for crafting such malicious inputs have been developed in both white and black-box settings, with most of the applications in the computer vision domain. Research in the adversarial robustness of ASR systems has experienced recent progress, but it is still incipient.

The possibility of inconspicuously controlling ASR-based devices with malicious inputs opens the door to serious threats, such as the deactivation of alarm systems or the unlocking of doors controlled by smart home devices. The widespread use of voice-activated smart devices further intensifies the risk coming from adversarial attacks. A possible threat scenario is the massive distribution of social media "click-bait" videos with hidden commands which can trigger online purchases.

The literature on adversarial ASR focuses on small, inaudible perturbations of the original audio input. Early works on adversarial audios have focused on misclassification with perceptible perturbations (Tavish Vaidya, Yuankai Zhang, Micah Sherr, and Clay Shields. Cocaine noodles: "Exploiting the gap between human and machine speech recognition", in 9th USENIX Workshop on Offensive Technologies (WOOT15), Washington, D.C., August 2015. SENIX Association; and Nicholas Carlini, Pratyush Mishra, Tavish Vaidya, Yuankai Zhang, Micah Sherr, Clay Shields, David Wagner, and Wenchao Zhou: "Hidden voice commands", in 25th USENIX Security Symposium (USENIX Security 16), pages 513-530, Austin, TX, August 2016. USENIX Association).

More recent works in a white-box setting optimize for imperceptibility by adding constraints to the amplitude of the perturbations (Nicholas Carlini and David Wagner: "Audio adversarial examples: Targeted attacks on speech-to-text", in 2018 IEEE Security and Privacy Workshops (SPW), pages 1-7, IEEE, 2018), and to the frequency features through psychoacoustic masking (Lea Schönherr, Katharina Kohls, Steffen Zeiler, Thorsten Holz, and Dorothea Kolossa: "Adversarial attacks against automatic speech recognition systems via psychoacoustic hiding", CoRP, abs/1808.05665, 2018).

Similarly, in a black-box setting, imperceptibility can be improved with multi-objective approaches, balancing text dissimilarity and acoustic similarity with respect to the original input (Shreya Khare, Rahul Aralikatte, and Senthil Mani: "Adversarial black-box attacks on automatic speech recognition systems using multi-objective evolutionary optimization", arXiv preprint arXiv:1811.01312, 2018). Alternatively, one can consider frequencies outside human perception, which can be picked up by microphones (Nirupam Roy, Haitham Hassanieh, and Romit Roy Choudhury: "Backdoor: Making microphones hear inaudible sounds", in Proceedings of the 15th Annual International Conference on Mobile Systems, Applications, and Services, MobiSys '17, page 2-14, New York, NY, USA, 2017, Association for Computing Machinery; and Guoming Zhang, Chen Yan, Xiaoyu Ji, Tianchen Zhang, Taimin Zhang, and Wenyuan Xu: "Dolphinattack: Inaudible voice commands", in Proceedings of the 2017 ACM SIGSAC Conference on Computer and Communications Security, CCS'17, page 103-117, New York, NY, USA, 2017. Association for Computing Machinery). This type of attack is completely inaudible to humans and does not fall into the category of adversarial examples, which are perceptible to humans, but not perceived as a threat.

In a white-box setting, the attacker has full knowledge about the model. This allows for efficient gradientbased optimization of the adversarial perturbations. In this scenario, one can promote the imperceptibility of perturbations by adding a constraint to the objective function. In the audio domain, such constraint can be a penalty term proportional to the amplitude of the perturbation (Nicholas Carlini and David Wagner: "Audio adversarial examples: Targeted attacks on speech-to-text", in 2018 IEEE Security and Privacy Workshops (SPW), pages 1-7, IEEE, 2018; McAuley, and Farinaz Koushanfar: "Universal adversarial perturbations for speech recognition systems", arXiv preprint arXiv:1905.03828, 2019; Sajjad Abdoli, Luiz G Hafemann, Jerome Rony, Ismail Ben Ayed, Patrick Cardinal, and Alessandro L Koerich: "Universal adversarial audio perturbations", arXiv preprintarXiv:1908.03173, 2019), or to the frequency features (Lea Schönherr, Katharina Kohls, Steffen Zeiler, Thorsten Holz, and Dorothea Kolossa: "Adversarial attacks against automatic speech recognition systems via psychoacoustic hiding", CoRP, abs/1808.05665, 2018; Yao Qin, Nicholas Carlini, Ian Goodfellow, Garrison Cottrell, and Colin Raffel: "Imperceptible, robust, and targeted adversarial examples for automatic speech recognition", 2019; Joseph Szurley and J. Zico Kolter: "Perceptual based adversarial audio attacks", 2019). In the latter case, the constraint aims to keep the frequencies of the perturbation below a hearing masking threshold generated by the original audio.

Existing literature on black-box audio attacks focuses on evolutionary strategies to optimize perturbations initialized as Gaussian noise. To promote imperceptibility, some methods add noise only to some of the least-significant bits of the audio samples (Moustafa Alzantot, Bharathan Balaji, and Mani Srivastava: "Did you hear that? adversarial examples against automatic speech recognition", arXiv preprint arXiv:1801.00554, 2018.).

In another approach, a second term is added to the fitness function to additionally maximize the acoustic similarity between the adversarial and the original audio (Shreya Khare, Rahul Aralikatte, and Senthil Mani: "Adversarial black-box attacks on automatic speech recognition systems using multi-objective evolutionary optimization", arXiv preprint arXiv:1811.01312, 2018).

In Rohan Taori, Amog Kamsetty, Brenton Chu, and Nikita Vemuri: "Targeted adversarial examples for black box audio systems", in 2019 IEEE Security and Privacy Workshops (SPW), pages 15-20, IEEE, 2019, a combination of an evolutionary strategy and gradient estimation is used to attack DeepSpeech in a gray-box setting, i.e. by considering the logits corresponding to character probabilities output.

In other words, voice-activated devices which use neural network-based speech-recognition are vulnerable to inconspicuous audio adversarial attacks. For example, an audio file might sound natural to humans while in fact containing an audio adversarial attack. A successful audio adversarial attack leads to a transcription by the speech recognition-based device which is "wrong" measured against the expected transcription before the audio-file was perturbed. The cause of the problem is that neural networks are intrinsically vulnerable to adversarial inputs. The vulnerability of the aforementioned devices to audio adversarial inputs therefore has to be assessed in the form of audio attacks. However, it is unclear how a technical setup for over-the-air black-box attack could look like.

It is an object of the present invention to overcome the aforementioned deficiencies of the prior art and to provide methods and devices for black-box over-the-air attack on a smart speaker. The object is achieved with the features of the independent claims. Dependent claims define preferred embodiments of the invention.

In particular, the present disclosure relates to a method for over-the-air attacks on an automated speech recognition device, the method comprising: a) sending an audio file to a speaker; b) retrieving information associated with an over-the-air recording from an automated speech recognition device, wherein the recording is associated with the audio file sent to the speaker; c) evaluating the received recording against a predetermined criterion; d) pertubating the audio file to generate a new audio file if the predetermined criterion is not reached; and e) repeating steps a) to e) with the new audio file until the predetermined criterion is reached.

Various embodiments may preferably implement the following features.

Preferably, retrieving information associated with an over-the-air recording comprises receiving the recording from the automated speech recognition device or more preferably comprises receiving information about the recording without actually receiving the recording itself. In other words, receiving information about the recording without actually receiving the recording itself may mean accessing the recording that is saved in a storage or database at the automated speech recognition device in order to determine what the automated speech recognition device has recorded without actually transferring the recording saved on the automated speech recognition device.

Sending the audio file to the speaker preferably comprises sending the audio file together with a command to play the audio at a predetermined time $t_1$, and wherein the method preferably further comprises: transmitting a command to the automated speech recognition device to start recording at time $t_1$; and transmitting a command to the automated speech recognition device to stop recording at time $t_2 = t_1 + \Delta t$, wherein $\Delta t$ is the length of the audio file.

The transmitted commands to start and stop recording are preferably transmitted in one command message to the automated speech recognition device.

The method preferably further comprises a step of creating the audio file before step a).

The audio file preferably comprises a speech command among speech commands that are recognized by the automated speech recognition device overlaied with a different audio data, preferably music data.

Pertubating the audio file preferably comprises pertubating the audio data without affecting the speech command.

The recording is preferably a temporary data file saved on the automated speech recognition device.

The predetermined criterion is preferably an amount of pertubations of the audio file and/or reaching a predetermined over-the-air recording at the automated speech recognition device.

Evaluating and pertubating the audio file preferably comprises the use of an evolutionary algorithm.

The evolutionary algorithm preferably comprises at least one of: adaptive mutation probability; adaptive addition of mutant parents; parent-selection based on fitness and diversity; re-ordering of parents genes sequences; and score-based crossover.

The method preferably further comprises: playing the audio file by a speaker; and over-the air recording by the automated speech recognition device while playing the audio file by the speaker.

The present disclosure also relates to a data processing apparatus for over-the-air attacks on a automated speech recognition device, wherein the apparatus comprises a processor configured to execute the steps according to the foregoing described method.

The present disclosure also relates to a system for over-the-air attacks on a automated speech recognition device comprising the data processing apparatus, a speaker and an automated speech recognition device, wherein the speaker is configured to play the audio file and the automated speech recognition device is configured to record the audio file over-the-air while the audio file is being played by the speaker.

The present disclosure also relates to a computer program product comprising a computer-readable program medium code stored thereupon, the code, when executed by a processor, causing the processor to implement any of the method steps described above.

In accordance with various embodiments, the optimization of attacks is done by many iterative steps. The attack file (audio file) is slightly adjusted, the transcription effect measured, and when "more damage" in terms of harming the model is detected, this direction of attack optimization is followed.

The evolutionary attack algorithm is preferably coordinated with the physical hardware components. In particular, queries to the model are preferably scheduled in accordance with an embodiment.

The method and devices in accordance with the present disclosure enables the coordination between software and hardware elements for the attack optimization. In particular, the algorithm may first generate attack trials. The trials are optimized/improved by using feedback from the model.

This iterative attack optimization may be carried out on a physical devices in the case of over-the-air black-box attack. Preferably, the exact steps of the attack algorithm may be scheduled in coordination with 1) the hardware which plays digital trial attack (over-the-air), 2) a hardware which records the sound waves, converting it back to digital format 3) a code/algorithm which feeds the recorded attack into the model.

For the attack optimization, the method and devices according to the present disclosure may provide coordination among the following elements:

1) optimization strategy to craft attacks iteratively, i.e. algorithm. The optimization procedure may involve the generation of sample-attacks, which have to be evaluated by the model. Trial attacks may be created digitally. The evaluation may be made by feeding the attacks to the model in digital form - after having been captured over-the-air. Different types of audio adver-sarial attacks may be constructed. Preferably, adversarial music is used. These are adversarially modified music files which sound natural to humans but trick AI audio systems. On an algorithmic level, here initially a random set of perturbations may be created ("parents") and the best fitting "children" (mutated audio files) moving the transcribed model output in the desired attack direction are kept, further modified, and iteratively evaluated following the steps below.

The method and devices in accordance with the present disclosure may be independent of the algorithmic implementation details. It may be appropriate for any iterative optimization strategy, which requires querying the speech recognition model in a black-box setting.

2) hardware to play trial-attacks (e.g. a speaker) -- convert digital attack into physical sound waves to mimic real-world conditions, since the devices are voice activated.

3) hardware to record trial-attacks (e.g. a microphone) -- convert physical trial-attack (sound waves) to digital form.

4) code designed to feed recorded, digital attacks to the speech recognition model and generating feedback for optimization algorithm.

In accordance with the present disclosure, it is possible to craft musical adversarial perturbations which can change an input classification to a chosen target. Such musical perturbations are audible, but may not be perceived as harmful and can potentially go unnoticed if embedded into some musical background.

In an embodiment, a black-box setting is chosen, using solely the text transcription output by the target model, and construct adversarial examples by adding sequences of musical notes to an original audio input.

The adversarial examples are preferably optimized towards a target via an adaptive evolutionary algorithm. The algorithmic design choices may help escaping local minima and exploit the sequential nature of the mapping of note-sequences to string transcriptions.

According to an embodiment, an adaptive mutation probability and an adaptive addition of mutant parents to foster parents diversity and escape local minima is provided.

Preferably, parents are chosen based on fitness and diversity.

Preferably, an additional type of parent-genotype splitting and switch the original order of parts of the genotype, promoting a more efficient feature re-use for audio sequences, is chosen.

Further preferably, crossover based on a low-cost estimation of parts of the genotype which lead to a better match with parts of the target may be performed.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.

Fig. 1 is a schematic illustration of a system according to an embodiment.

Fig. 2 is a flow chart of a method according to an embodiment.

Fig. 3 is an schematic illustration of Standard Crossover with Standard and Complementary Split Points.

Fig. 4 is a schematic illustration of a Pair-wise Crossover: according to an embodiment.

Fig. 5 is a graph illustrating mutation probability for a population size of 50(20) with c=1 according to an embodiment.

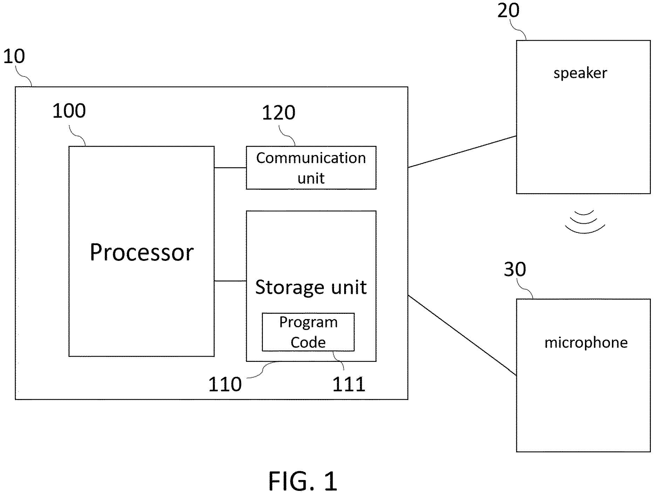

Fig. 1 shows a system system for over-the-air attacks on an automated speech recognition device 30 comprising a data processing apparatus 10, a speaker 20 and the automated speech recognition device 30, wherein the speaker 20 is configured to play the audio file and the automated speech recognition device 30 is configured to record the audio file over-the air while the audio file is being played by the speaker 20.

The data processing apparatus 10 according to an embodiment of the present disclosure may be a computer, a mobile phone, a laptop, a tablet computer and is not limited herein. The data processing apparatus 10 may include a processor 100 such as a microprocessor or Application Specific Integrated Circuit (ASIC), a storage unit 110 and a communication unit 120. The storage unit 110 may be any data storage device that stores a program code 112, which is accessed and executed by the processor 100. Embodiments of the storage unit 112 include but are not limited to a subscriber identity module (SIM), read-only memory (ROM), flash memory, random-access memory (RAM), hard-disk, and optical data storage device. The communication unit 120 may a transceiver and is used to transmit and receive signals according to processing results of the processor 100. In an embodiment, the communication unit 120 transmits and receives the signals via at least one wired connection as shown in Fig. 1. Alternatively or in addition, the communication unit 120 transmits and receives the signals via at least one antenna (not shown).

In an embodiment, the storage unit 110 and the program code 112 may be omitted and the processor 100 may include a storage unit with stored program code.

The processor 100 may implement any one of the steps in exemplified embodiments on the data processing apparatus 10, e.g., by executing the program code 112.

As mentioned above, the communication unit 120 may be a transceiver. The communication unit 120 may as an alternative or in addition be combining a transmitting unit and a receiving unit configured to transmit and to receive, respectively, signals.

The speaker 20 is connected to the data processing apparatus 10 and configured to receive the signals send by the data processing apparatus 10. The speaker 20 is further configured to implement any one of the steps in exemplified embodiments as described herein, e.g. by use of a respective processor. In particular, the speaker 20 may be configured to play the audio file, e.g. as instructed by the data processing apparatus 10.

The automated speech recognition device 30 is connected to the data processing apparatus 10 and configured to receive the signals send by the data processing apparatus 10. The automated speech recognition device 30 is further configured to implement any one of the steps in exemplified embodiments as described herein, e.g. by use of a respective processor. In particular, the automated speech recognition device 30 may be configured to record the audio file over-the-air while the audio file is being played by the speaker 20, e.g. as instructed by the data processing apparatus 10.

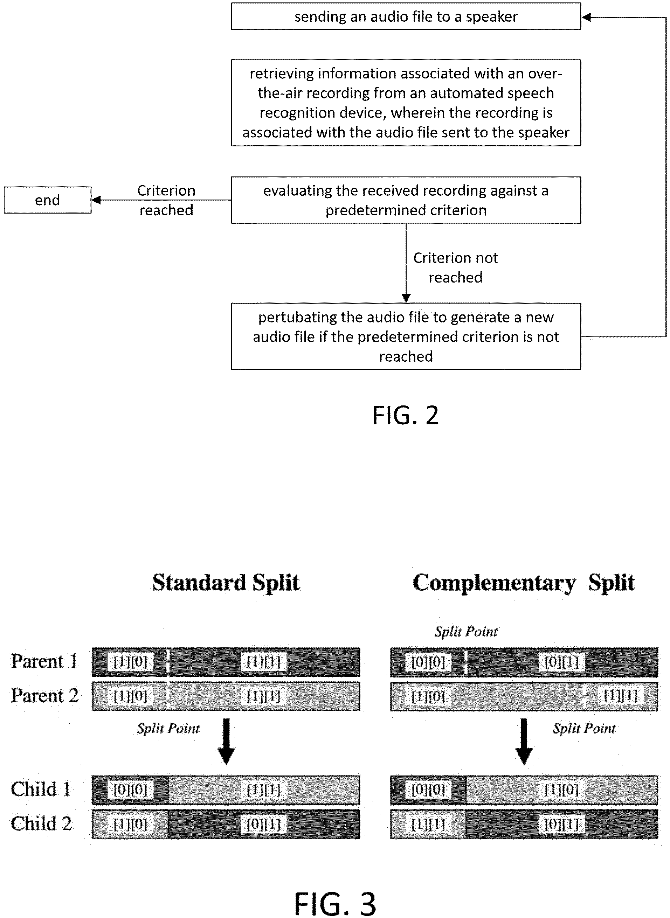

With reference to Fig. 2, a method according to an embodiment is described in the following. A method for over-the-air attacks on an automated speech recognition device, the method comprising: a) sending an audio file to a speaker; b) retrieving information associated with an over-the-air recording from an automated speech recognition device, wherein the recording is associated with the audio file sent to the speaker; c) evaluating the received recording against a predetermined criterion; d) pertubating the audio file to generate a new audio file if the predetermined criterion is not reached; and e) repeating steps a) to e) with the new audio file until the predetermined criterion is reached.

Sending the audio file to the speaker may comprise sending the audio file together with a command to play the audio at a predetermined time $t_1$, and wherein the method may further comprise: transmitting a command to the automated speech recognition device to start recording at time $t_1$; and transmitting a command to the automated speech recognition device to stop recording at time $t_2=t_1+\Delta t$, wherein $\Delta t$ is the length of the audio file.

The transmitted commands to start and stop recording may be transmitted in one command message to the automated speech recognition device.

The method may further comprise a step of creating the audio file before step a).

The audio file may comprise a speech command among speech commands that are recognized by the automated speech recognition device overlaied with a different audio data, preferably music data.

Pertubating the audio file may comprise pertubating the audio data without affecting the speech command.

The recording may be a temporary data file saved on the automated speech recognition device.

The predetermined criterion may be an amount of pertubations of the audio file and/or reaching a predetermined over-the-air recording at the automated speech recognition device.

Evaluating and pertubating the audio file may comprise the use of an evolutionary algorithm, which will be described in more detail below.

The evolutionary algorithm may comprise at least one of: adaptive mutation probability; adaptive addition of mutant parents; parent-selection based on fitness and diversity; re-ordering of parents genes sequences; and score-based crossover.

The method may further comprise: playing the audio file by the speaker 20; and over-the air recording by the automated speech recognition device 30 while playing the audio file by the speaker 20.

As will be described in the following, DeepSpeech v0.9.1 is used as an exemplary target model to evaluate the methods and devices according to the present disclosure using audio commands randomly sampled from the Fluent Speech Commands dataset. Two sets of target commands are considered: 1) Transcriptions of the Google Speech Commands dataset (Pete Warden: "Speech commands: A dataset for limited-vocabulary speech recognition", CoRR, abs/1804.03209, 2018), and 2) Top 20 commands uttered to Google Home (Frank Bentley, Luvogt Chris, Silverman Max, Wirasinghe Rushani, White Brooke, and Lottrjdge Danielle: "Understanding the longterm use of smart speaker assistants", in Proceedings of the ACM on Interactive, Mobile, Wearable and Ubiquitous Technologies 2, 3, 2018).

The experiments show that it is possible to successfully change the original audio transcription with an average target similarity of 70% over both target sets. A target success rate of 60% and an average target similarity of 84% on the Google Speech Commands target set is achieved. On the the Google Home target set a success rate of 15%, an average target similarity of 63%, and an average word error rate of 105% is achieved.

In particular, the target model is DeepSpeech, a widely used open-source speechto-text model first developed in 2014 (Awni Hannun, Carl Case, Jared Casper, Bryan Catanzaro, Greg Diamos, Erich Elsen, Ryan Prenger, Sanjeev Satheesh, Shubho Sengupta, Adam Coates, et al.: "Deep speech: Scaling up end-to-end speech recognition", arXiv preprint arXiv:1412.5567, 2014). In the following description, its recent implementation by Mozilla is cosnidered, which features some architectural changes with respect to the original one. The core architecture of the model is based on a recurrent neural network whose input data are a timeseries of vectors of frequency features in the form of a spectrogram.

The model outputs a sequence of character probabilities for the input's transcription over the set *{a,b,..., z, space, apostrophe, blank}*. Overall, the design of DeepSpeech leads to an end-to-end learning pipeline that eliminates the need for extensive data preprocessing and instead provides a state-of-the-art performance for various speech tasks. A recent pre-trained version (0.9.1) of Deep-Speech composed of a trie data structure containing the vocabulary and a language model (Kenneth Heafield. Kenlm: "Faster and smaller language model queries", in Proceedings of the sixth workshop on statistical machine translation, pages 187-197, 2011). Since a black-box setting is considerd, DeepSpeech can be substituted with another ASRsystem as long as there is access to the model transcriptions.

The goal of the experimental attacks is to change the transcription of an audio input to a target transcription by adding musical perturbations to it. A black-box setting and crafting musical note-sequences via an adaptive evolutionary approach is considered. In analogy with evolutionary biology a musical note-sequence corresponds to the genotype, the adversarial example corresponds to the phenotype, and the fitness of the adversarial example depends on how its transcription by the attacked model matches the target.

Let $x = (x^{(1)},..., x^{(n)})$ denote a sequence of amplitudes $x^{(i)}$ corresponding to the time samples of an audio of duration $l_x$ (in seconds) sampled with a fix sampling rate. Let $F(x)$ denote the prediction of a speech-to-text model on the audio input x, with F(x) corresponding to a string $s = (s^{(1)},..., s^{(m)})$. Adversarial perturbations are denoted by δ, and an adversarial audio is defined as $x_{adv} = x + \delta$. A target transcription is denoted by t.

A constant population size N is considered and denoted by $\delta_i^g$ the (genotype of) population member i of generation g. Since x is a constant vector, we interchangeably refer to the optimization of $\delta_i$ as the optimization of $x_{advi}$.

The scores are calculated based on the normalized edit distance between two strings, $s_i$ and $s_j$, with respective

lengths $l_{s_i}$ and $l_{s_j}$, namely:

$$D\left(s_i, s_j\right) = \frac{ED\left(s_i, s_j\right)}{max\left(l_{s_i}, l_{s_j}\right)} \tag{1}$$

where the edit distance $ED(s_i, s_j)$ is the number of insertions, deletions and substitutions to transform $s_i$ into $s_j$.

The musical perturbations and the evolutionary approach is described in more detail in the following.

Musical perturbations are generated using the Magenta note-seq python library (https://github.com/magenta/note-seq). The sequence of musical notes follows the MIDI tuning standards, and each note is described by the following parameters: instrument: the type of instrument, e.g. piano or saxophone, pitch: a musical note, defined in the interval [1,127], velocity: the loudness of a musical note, defined in the interval [1,127], and duration: the time length (in seconds) of a musical note. This value is fixed for the whole note sequence.

The values of the pitch and velocity will be drawn from uniform distributions over the corresponding intervals, e.g. $pitch^{(i)} \sim U(1,127)$.

To simplify the notation the dependency of a musical note on its parameters is omitted and it is simply debited by $\delta_i$.

After generating a MIDI note-sequence, the sequence is resampled with the same sampling rate as x. Both the MIDI note-sequence and its resampled representation is deoted as 6. All evolutionary operations are applied to the note-sequence in the MIDI note-space, but the addition of the perturbation to the original audio can only be performed with the resampled $\delta$.

With regard to the evolutionary algorithm, an initial set of N random note-sequences $\left(\delta_1^0, \ldots, \delta_N^0\right)$ is cerated to start with. These note-sequences are subsequently added to the original audio command x, making up the initial population of adversarial examples P° = $\left(x_{adv_1}^0, \ldots, x_{adv_N}^0\right)$.

The algorithm then iterates through the following steps, until a stopping criterion is met: (1) Classification of adversarial examples by a black-box model, generating the corresponding text transcriptions; (2) selection of fittest adversarial examples based on how close their transcriptions match a chosen target; (3) crossover of fittest perturbations creating children; and (4) mutation of the children and addition of mutants.

A stopping criterion can be added, e.g. at step (2) when one of the members has reached the optimal value of the fitness function, i.e. the target. Additionally, one might also want to limit the number of generations. The foregoing steps are described in more detail in the following. Regarding step (2), i.e. selecting the fittest members: As the method iterates through the generations, the method compares the fitness of the previous and the current generations and keep the fittest N members. The fittest perturbations are denoted as the elite group.

The fitness of a member $\delta_i$ is defined by the normalized edit distance between the predicted string $s_i = F(x_{adv_i})$ and the target string t. The vector of scores of the elite group at generation g is denoted by $G_{elite}^g$.

In addition to keeping the fittest perturbations, the method may maintain a diverse pool of parents. For that, a candidate's crowding distance with respect to the elite group is taken into account. This helps increasing the variability of the elite group by favoring the inclusion of a member not only based on its fitness but also on how it increases diversity. Adding some diversity to the elite group can potentially help boosting the optimization process and avoid local minima. The crowding distance of a candidate member $\delta_i$ (with corresponding transcription $s_i$) to the elite group is defined as:

$$C_i = \sum_{j=0}^{N} \frac{D\left(s_i, s_j\right)}{maxD\left(s_i, s_j\right) - minD\left(s_i, s_j\right)},$$

$$maxD\left(s_i, s_j\right) \neq minD\left(s_i, s_j\right),$$

$$\sum_{j=0}^{N} \frac{D(s_i, s_j)}{\alpha},$$

$$maxD(s_i, s_j) = minD(s_i, s_j),$$

where the index $j$ runs over the members of the elite group and $\alpha$ is a small constant whose value is chosen to allow for introducing new members in order to escape local minima without significantly increasing the average score - $\alpha$ is set to 0.1. The crowding distances of each generation to the [0,1] interval is normalized, and elite member selection based on the following scores is perfomed:

$$S_i = D(s_i, t) \cdot (1 - \beta C_i),$$

where $\beta$ controls the incentive to diversity. Here, $\beta$ is set to 1 and increases by 5% at each 30 generations if the standard deviation of the elite group's average score over these last 30 generations is zero, i.e. if the population is stuck in a local minimum. Setting $\beta > 1$ allows for negative selection scores, however, this is rarely the case typical crowding-distances are << 1.

For parents crossover only the fitness scores of the elite group is considered, i.e. at generation g, the vector of scores $D_{elite}^g$ induces the selection probability $p^g = softmax(D_{elite}^g)$.

Regarding step (3), i.e. crossover of the parents: At step $j$ parents are drawn pair-wise from the elite group established at the previous step, i.e. $parent_i^j \sim p^{j-1}$, and subsequently crossed-over. Two types of crossover are considered, which we denote by *Standard* and *Piece-wise*.

With *Standard Crossover,* pair-wise selected parents are split in the same random position $s_{p0} = s_{p1}$ and their complementary parts are recombined while keeping the original order of the parts. In addition to this ordered split, a *complementary split* with probability $p_{cs}$ is considered. In this case, the split point $s_{p0}$ of the first parent is randomly chosen and the split point of the second parent is given by $s_{p1} = n_{pitches} - s_{p0}$, so the split points are complementary to each other, and the original parts with a different order is recombined. This is illustrated in Fig. 3, wherein it can be seen that with a Complementary Split point, the original parts of Parent 1 appear in flipped order in the children.

With Piece-wise Crossover, pair-wise selected parents are split in random positions and their parts are recombined based on the match of their corresponding transcriptions with respect to the target. This is done by splitting the parents transcriptions in split points proportional to the split points in the corresponding audios.

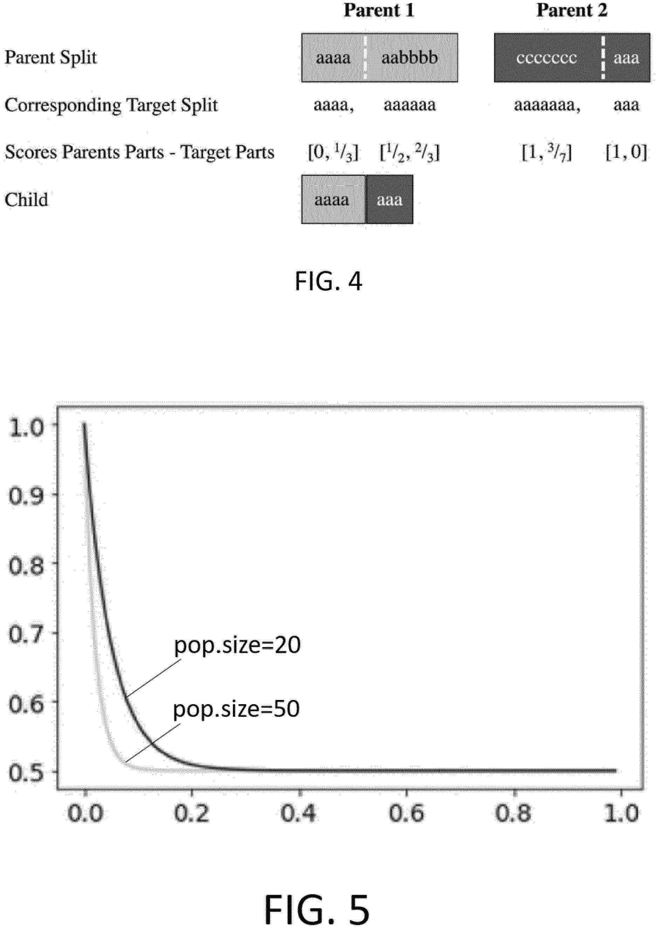

The same is done for the target transcription. The left and right parts of the parents transcriptions are scored with respect to the left and right parts of the target and those with the highest scores are merged together in the positions which best match the parts of the target. This is visualized in Fig. 4, wherein in this simplified example, Parent 1 has transcription "aaaaaabbbb", Parent 2 has transcription "cccccccaaa", and the target is "aaaaaaaaaa". The parts of the parents are scored based on their matches with the parts of the target. The best matching parts are combined into a child.

The success of Piece-wise Crossover in creating children which improve the target match relies on the mapping of the features of $\delta_i$ to the transcription of $x_{adv_i}$. As it is very difficult to measure which parts of the adversarial audio $x_{adv_i}$ maps to which parts of its transcription string, it is difficult to assess the quality of the mapping we consider: using simple proportionality. To remain agnostic, the algorithm is initialized by assigning both types of crossover the same probability. At each generation, if the average score of the elite group has improved, we increase the probability of the applied crossover method by 2% and bound its value to be in the interval [0.3, 0.7].

Regarding step (4), i.e. mutation of children: the children with a probability of at least 50% are mutated. If the elite members are similar, it is desirable to increase the rate of mutations as long as one of the elite members has not reached the target, i.e. has achieved zero D-score. To accomplish this, an adaptive probability of mutation is introduced:

$$p_{mut} = \frac{0.5}{sig(N \cdot \Delta)}, \qquad (3)$$

where $\Delta$ is the ratio between the standard deviation and the average of the scores vector of the elite members $D^g$ at

generation $g$:

$$\Delta = \frac{\sigma(D^g)}{\mu(D^g)}. \qquad (4)$$

This term $\Delta$ does not diverge, since the evolutionary algorithm terminates before $\mu(D^g)$ reaches zero. The function sig($\cdot$) denotes sigmoid-like function, $sig(x) = 1/(c + exp(-x))$, and the constant c is adjusted to control the maximum value of $p_{mut}$. In the following experiments, c = 0.6 is considered, which results in $max\ p_{mut}$ = 0.8.

Because larger populations tend to have more varied members, $\Delta$ is multiplied by the population size $N$. In Fig. 5, it is illustrated how the probability of mutation varies with $\Delta$ for different population sizes. The probability starts to increase significantly when the standard deviation is at $\sim$ 10% (20%) with respect to the average score value In general, if the standard deviation is small, the mutation probability increases, but this is counter-acted by the average score value in case the scores are already small - closer to the optimal value.

The mutation of a child corresponds to the addition of a random value to each note following a normal distribution $\mathcal{N}$ (0,$mut_{std}$). The reference values of $mut_{std}$ for the note and velocity parameters are the standard deviations of the corresponding parameters in the elite population divided by two. As these quantities are also subject to halting at some sub-optimal values, its values are varied by multiplying them by a random factor drawn from $\mathcal{N}$ (1, 0.1).

Regarding the addition of mutants: the addition of mutants at each generation, as well as the crossover between elite and non-elite members, help to prevent the convergence to local minima. Moreover, the optimization process may be restarted if the model gets stuck to a local minimum for too long, discarding the latest generation.

Given the definition of elite members and the softmax probability induced by their scores, top elite members will be crossed-overwith bottom elite members with a smaller probability than among themselves. However, if scores of all members are very similar, or equal, crossover between elite members might not be enough to escape local minima, even with the mutation of the children. In order to address these issues, the following measures are introduced:

(1) At each generation step, mutants are introduced into the population at a rate of 25%.
(2) At each crossover step, a parent will be a mutant with a probability $p_{mut.parent}$ which starts at a baseline, $p_{mut.parent0}$, and increases according to:

$$p_{mut.parent} = \frac{p_{mut.parent0}}{sig(N \cdot \Delta)}, \qquad (5)$$

The shape of $p_{mut.parent}$ is exactly as that of Fig. 5, but with different scaling of the y-axis.

For the Standard Crossover $p_{mut.parent0}$ = 0.05 and $c$ = 17, resulting in a max $p_{mut.parent}$ = 0.9. Moreover, a second mutant parent with probability $p_{mut.parent}/2$ is added. For the Piece-wise Crossover, $\mu_0$ = 0.2 and $c$ = 2 is considered, resulting in a max $\mu$ = 0.6.

Next, the algorithm according to an embodiment is described, wherein input: clean audio $x$, target transcription $t$, population size $N$, number of children $S$, interval of musical notes parameters [$\delta_{min}, \delta_{max}$], children mutation probability $p_{mut}$, probability of mutant parent $p_{mut.parent}$, and probability of piece-wise crossover $p_{xo_1}$.

*// Create initial population*

**for** *i* = 1,…,*N* in population **do**

$$p_i^0 \leftarrow x + \delta_i \sim \mathcal{U}(\delta_{min}, \delta_{max})$$

**end for**

*// Iterate over generations*

**for** *g* = 1,…,*G* in generations **do**

    **for** *i* = 1,…,*N* in population **do**

$$D_i^{g-1} = FitnessScore\left(p_i^{g-1}\right)$$

    **end for**

    *// Find fittest member*

$$x_{adv} = p_{argmin_j D_j^{g-1}}^{g-1}$$

    **if** $F(x_{adv}) == t$ **then**

        **Return** $x_{adv}$ *//Target achieved*

    **end if**

    *// Compute selection probabilities*

$$p^g = softmax(F^{g-1})$$

    *// Update mutation and mutant parent probabilities*

$$p_{mut} = p_{mut}(D^{g-1})$$

$$p_{mut.parent} = p_{mut.parent}(D^{g-1})$$

**for** i = 1,...,S in Number of Children **do**

> Sample $parent_1$ from $p^{g-1}$ according to $p^g$

> Sample $parent_2$ from $p^{g-1}$ according to $p^g$

> Replace $parent_1$ with mutant according to $p_{mut.parent}$

> child = Crossover ($parent_1$, $parent_2$)

> // Sample Crossover type

> Sample Crossover type according $Bernoulli\left(p_{xo_1}\right)$

> // Mutate and clip

> $child_{mut} = child + p_{mut} * \mathcal{G}(o, mut_{std})$

> $child_{mut} = clip(child_{mut}, \delta_{min}, \delta_{max})$

> // Add mutated child to current generation g

> $\mathcal{P}_i^g = \left\{x_{orig} + w_{avg} * child_{mut}\right\}$

**end for**

// Add mutants to current generation g

**for** i = 1, ...,N - S **do**

> $\mathcal{P}_i^g \leftarrow x + \delta_i \sim \mathcal{U}(\delta_{min}, \delta_{max})$

**end for**

**end for**

Next, the attacks are benchmarkes on randomly selected audio files from the Fluent Speech Commands dataset (LorenLugosch, Mirco Ravanelli, PatrickIgnoto, VikrantSinghTomar, and Yoshua Bengio: "Speech model pre-training for end-to-end spoken language understanding", 2019) which contains 248 different commands to activate smart home or virtual assistance devices.

This dataset features high-quality recordings and demographically diverse speakers, resulting in a realistic generic setup. This dataset is chosen because it represents typical real-world interactions with of voice-activated devices. All commands are recorded as 16 kHz single-channel .wav audio files. For the first part of the experiments the targets correspond to ten words, which are the transcriptions of the Google Speech Commands dataset (Pete Warden:

"Speech commands: A dataset for limited-vocabulary speech recognition", CoRR, abs/1804.03209, 2018.). For the second part, the top 20 commands uttered to Google Home are considerd (Frank Bentley, Luvogt Chris, Silverman Max, Wirasinghe Rushani, White Brooke, and Lottrjdge Danielle: "Understanding the longterm use of smart speaker assistants", in Proceedings of the ACM on Interactive, Mobile, Wearable and Ubiquitous Technologies 2, 3, 2018.). To evaluate the quality of the attacks, two metrics are chosen. The target success rate indicates how many of the generated attacks reach the intended target after a maximum of 3000 iterations. As an additional measure of attack performance, the average target similarity, defined as 1- average normalized edit distance, is reported.

The instrument used for generating the musical notes is a piano. Notes with duration of 0.02 seconds, and a population size N = 50 are considered. At each generation, 37 children are produced (75%) and 13 mutants are added. The iteration is stopped at 3000 generations if the target has not been achieved.

All musical perturbations are resampled with a sampling rate of 16 kHz to match that of the input command x. Audio inputs x and the resampled $\delta$ are integer vectors with amplitudes normalized to the interval [-32768, 32767] - considering a 16-bit audio file, which can store values in the interval [-1 X $2^{15}$, $2^{15}$ - 1]. Because x is normalized to always span the interval of minimum and maximum amplitudes, it can be rescaled to x = const $Xx$, with const < 1 in order to be able to add noise to the higher amplitudes of $x$.

Adversarial perturbations $\delta$ which have (approximately) the same time duration as the input x are considered. Since $\delta$ is a sequence of notes of duration $l_{note}$, it is composed of $n_{pitches} = ceil(l_x/l_{note})$, i.e. $\delta = (\delta^{(1)},...\delta^{(n_{pitches})})$.

The goal of the attack is to change the prediction of DeepSpeech on an input command to a target with musical perturbations. First, the approach is evaluated for short target sentences, which represent meaningful, common commands, especially in the context of smart devices. Valid examples of such short targets are given by the ten labels of the Google Speech Commands dataset, which was explicitly designed to build and test on-device models and their voice interfaces such as ASR-systems in a smart home environment. All ten labels are taken as targets and one adversarial example for each of them is generated.

The results are summarized in the Table 1 below, where the first column contains the transcription of the original audio command, the second column refers to the intended target, the third column shows the best prediction after a maximum of 3000 iterations and the last column gives the normalized edit distance between target and prediction.

Table 1: Results for all ten targets obtained from the Google Speech Commands dataset

| Original | Target | Prediction | Score* |
|---|---|---|---|
| switch off the washroom lights | yes | yes | 0.0 |
| make it quieter | down | down | 0.0 |
| switch language | stop | stop | 0.0 |
| switch off the washroom lights | go | go | 0.0 |
| play the music | no | no | 0.0 |
| Make it louder | on | on | 0.0 |
| bathroom lights on | left | let | 0.25 |
| I need volume | off | of | 0.33 |
| bedroom heat on | right | eighteent | 0.5 |
| turn the kitchen temperature down | up | upon | 0.5 |
| *normalized edit distance between target and prediction | | | |

As can be seen from Table 1 an average target success rate of 60% and an average normalized edit distance of 0.16 is achieved, which translates to an average target similarity of 84%.

Furthermore, the approach is evaluated with more complex targets that explicitly represent meaningful intents in a smart home context. In order to define a suitable target set, the top 20 commands made to Google Home are chosen. A target success rate of 15% and an average target similarity of 63% is achieved. To assess how far the approach is able to change the original audio command, the average word error rate between the original transcriptions and the predicted targets is additionally calculated. The attack leads to an average word error rate of 105%.

According to the present disclosure, it can be demonstrated that it is possible to generate targeted attacks in a black-box setting by perturbing speech commands with musical notes. As command-activated smart devices become an ubiquitous technology, it is relevant to evaluate the approach on datasets which reflect typical usage of these devices. Thus, attacks on DeepSpeech vO.9.1 using audio commands samples from the Fluent Speech Commands dataset are used. When considering transcriptions of the Google Speech Commands as targets, an attack success rate of 60% and an average target similarity of 84% is achieved. For more complex targets, sampled from the mostly used Google Home commands, the attack has a success rate of 15% and an average target similarity of 63%. In the latter case, the attack leads to an average word error rate of 105%. The present disclosure thus relates to the first targeted adversarial attack based on music.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1. A method for over-the-air attacks on an automated speech recognition device (30), the method comprising:

   a) sending an audio file to a speaker (20);
   b) retrieving information associated with an over-the-air recording from an automated speech recognition device (30), wherein the recording is associated with the audio file sent to the speaker (20);
   c) evaluating the received recording against a predetermined criterion;
   d) pertubating the audio file to generate a new audio file if the predetermined criterion is not reached; and
   e) repeating steps a) to e) with the new audio file until the predetermined criterion is reached.

2. The method of claim 1, wherein sending the audio file to the speaker (20) comprises sending the audio file together with a command to play the audio at a predetermined time $t_1$, and wherein the method further comprises:

   transmitting a command to the automated speech recognition device (30) to start recording at time $t_1$; and
   transmitting a command to the automated speech recognition device (30) to stop recording at time $t_2 = t_1 + \Delta t$, wherein $\Delta t$ is the length of the audio file.

3. The method of claim 2, wherein the transmitted commands to start and stop recording are transmitted in one command message to the automated speech recognition device (30).

4. The method of any one of claims 1 to 3, further comprising a step of creating the audio file before step a).

5. The method of any one of claims 1 to 4, wherein the audio file comprises a speech command among speech commands that are recognized by the automated speech recognition device (30) overlaied with a different audio data, preferably music data.

6. The method of claim 5, wherein pertubating the audio file comprises pertubating the audio data without affecting the speech command.

7. The method of any one of claims 1 to 6, wherein the recording is a temporary data file saved on the automated speech recognition device (30).

8. The method of any one of claims 1 to 7, wherein the predetermined criterion is an amount of pertubations of the audio file and/or reaching a predetermined over-the-air recording at the automated speech recognition device (30).

9. The method of any one of claims 1 to 8, wherein evaluating and pertubating the audio file comprises the use of an evolutionary algorithm.

10. The method of claim 9, wherein the evolutionary algorithm comprises at least one of:

    adaptive mutation probability;
    adaptive addition of mutant parents;
    parent-selection based on fitness and diversity;
    re-ordering of parents genes sequences; and
    score-based crossover.

11. The method of any one of claims 1 to 10, further comprising:

    playing the audio file by a speaker (20); and
    over-the air recording by the automated speech recognition device (30) while playing the audio file by the speaker (20).

12. A data processing apparatus (10) for over-the-air attacks on a automated speech recognition device (30), wherein the apparatus comprises a processor (100) configured to execute the steps according to any one of claims 1 to 10.

**13.** A system for over-the-air attacks on a automated speech recognition device (30) comprising the data processing apparatus of claim 12, a speaker (20) and an automated speech recognition device (30), wherein the speaker (20) is configured to play the audio file and the automated speech recognition device (30) is configured to record the audio file over-the air while the audio file is being played by the speaker (20).

**14.** A computer program product comprising a computer-readable program medium code stored thereupon, the code, when executed by a processor, causing the processor to implement a method recited in any one of claims 1 to 10.

**Amended claims in accordance with Rule 137(2) EPC.**

**1.** A method for a black-box over-the-air attacks on an automated speech recognition device (30), the method comprising:

    a) sending an audio file to a speaker (20);
    b) retrieving a transcription associated with an over-the-air recording from an automated speech recognition device (30), wherein the recording is associated with the audio file sent to the speaker (20);
    c) evaluating the received transcription against a predetermined criterion;
    d) perturbating the audio file to generate a new audio file if the predetermined criterion is not reached; and
    e) repeating steps a) to e) with the new audio file until the predetermined criterion is reached.

**2.** The method of claim 1, wherein sending the audio file to the speaker (20) comprises sending the audio file together with a command to play the audio at a predetermined time $t_1$, and wherein the method further comprises:

    transmitting a command to the automated speech recognition device (30) to start recording at time $t_1$; and transmitting a command to the automated speech recognition device (30) to stop recording at time $t_2=t_1+\Delta t$, wherein $\Delta t$ is the length of the audio file.

**3.** The method of claim 2, wherein the transmitted commands to start and stop recording are transmitted in one command message to the automated speech recognition device (30).

**4.** The method of any one of claims 1 to 3, further comprising a step of creating the audio file before step a).

**5.** The method of any one of claims 1 to 4, wherein the audio file comprises a speech command among speech commands that are recognized by the automated speech recognition device (30) overlaied with a different audio data, preferably music data.

**6.** The method of claim 5, wherein perturbating the audio file comprises perturbating the audio data without affecting the speech command.

**7.** The method of any one of claims 1 to 6, wherein the recording is a temporary data file saved on the automated speech recognition device (30).

**8.** The method of any one of claims 1 to 7, wherein the predetermined criterion is an amount of perturbations of the audio file and/or reaching a predetermined over-the-air transcription at the automated speech recognition device (30).

**9.** The method of any one of claims 1 to 8, wherein evaluating the transcription and perturbating the audio file comprises the use of an evolutionary algorithm.

**10.** The method of claim 9, wherein the evolutionary algorithm comprises at least one of:

    adaptive mutation probability;
    adaptive addition of mutant parents;
    parent-selection based on fitness and diversity;
    re-ordering of parents genes sequences; and
    score-based crossover.

**11.** The method of any one of claims 1 to 10, further comprising:

playing the audio file by a speaker (20); and
over-the air recording by the automated speech recognition device (30) while playing the audio file by the speaker (20).

12. A data processing apparatus (10) for over-the-air attacks on a automated speech recognition device (30), wherein the apparatus comprises a processor (100) configured to execute the steps according to any one of claims 1 to 10.

13. A system for over-the-air attacks on a automated speech recognition device (30) comprising the data processing apparatus of claim 12, a speaker (20) and an automated speech recognition device (30), wherein the speaker (20) is configured to play the audio file and the automated speech recognition device (30) is configured to record the audio file over-the air while the audio file is being played by the speaker (20).

14. A computer program product comprising a computer-readable program medium code stored thereupon, the code, when executed by a processor, causing the processor to implement a method recited in any one of claims 1 to 10.

FIG. 1

FIG. 2

**Standard Split**          **Complementary Split**

FIG. 3

|  | Parent 1 | Parent 2 |
|---|---|---|

Parent Split

Corresponding Target Split   aaaa,   aaaaaa    aaaaaaa,   aaa

Scores Parents Parts - Target Parts   $[0, {}^1/_3]$   $[{}^1/_2, {}^2/_3]$    $[1, {}^3/_7]$   $[1, 0]$

Child

## FIG. 4

pop.size=20

pop.size=50

## FIG. 5

Europäisches
Patentamt

European
Patent Office

Office européen
des brevets

# EUROPEAN SEARCH REPORT

Application Number

EP 21 16 7155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHÖNHERR LEA ET AL: "Imperio: Robust Over-the-Air Adversarial Examples for Automatic Speech Recognition Systems", 2020 2ND SYMPOSIUM ON SIGNAL PROCESSING SYSTEMS, ACMPUB27, NEW YORK, NY, USA, 7 December 2020 (2020-12-07), pages 843-855, XP058583627, DOI: 10.1145/3427228.3427276 ISBN: 978-1-4503-8858-0 | 1-7, 11-14 | INV. G10L15/26 G10L15/01 G10L19/018 ADD. G06F3/16 G06N3/12 |
| Y | * page 845, paragraph 2.2 * | 9,10 | |
| A | * page 846, paragraph 3 - page 848, paragraph 4; figure 1 * * page 851, paragraph 5 - page 852, paragraph 6 * | 8 | |
| Y,D | MOUSTAFA ALZANTOT ET AL: "Did you hear that? Adversarial Examples Against Automatic Speech Recognition", ARXIV.ORG, CORNELL UNIVERSITY LIBRARY, 201 OLIN LIBRARY CORNELL UNIVERSITY ITHACA, NY 14853, 2 January 2018 (2018-01-02), XP081212012, * page 1, paragraph 1. - page 3, paragraph 2.; figure 1 * * page 5, paragraph 4 * | 9,10 | |
| Y,D | TAORI ROHAN ET AL: "Targeted Adversarial Examples for Black Box Audio Systems", 2019 IEEE SECURITY AND PRIVACY WORKSHOPS (SPW), IEEE, 19 May 2019 (2019-05-19), pages 15-20, XP033619094, DOI: 10.1109/SPW.2019.00016 [retrieved on 2019-09-18] * page 16, paragraph 1. B.; figure 1 * * page 17, paragraph II. - page 19, paragraph II. C. * | 9,10 | TECHNICAL FIELDS SEARCHED (IPC) G10L G06F G06N |

-/--

The present search report has been drawn up for all claims

| Place of search | Date of completion of the search | Examiner |
|---|---|---|
| Munich | 20 September 2021 | Virette, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 21 16 7155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | NICHOLAS CARLINI ET AL: "Hidden Voice Commands", THIS PAPER IS INCLUDED IN THE PROCEEDINGS OF THE 25TH USENIX SECURITY SYMPOSIUM AUGUST 10-12, vol. 8275, 10 August 2016 (2016-08-10), pages 513-530, XP055460530, Berlin, Heidelberg DOI: 10.1007/978-3-642-45065-5 ISBN: 978-3-642-45064-8 * page 515, paragraph 3 - page 516, paragraph 3.2; figure 2 * * page 520, paragraph 4.5 - page 521 * ----- | 1-14 | |
| A | XUEJING YUAN1 ET AL: "CommanderSong: A Systematic Approach for Practical Adversarial Voice Recognition", USENIX, USENIX, THE ADVANCED COMPUTING SYSTEMS ASSOCIATION , 23 February 2021 (2021-02-23), pages 1-17, XP061054339, Retrieved from the Internet: URL:http://www.usenix.org/system/files/conference/usenixsecurity18/sec18-yuan.pdf [retrieved on 2021-09-17] * page 53, paragraph 4 - page 55, paragraph 4.3; figure 3 * ----- -/-- | 1-14 | TECHNICAL FIELDS SEARCHED (IPC) |

The present search report has been drawn up for all claims

| Place of search | Date of completion of the search | Examiner |
|---|---|---|
| Munich | 20 September 2021 | Virette, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 21 16 7155 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HIROMU YAKURA ET AL: "Robust Audio Adversarial Example for a Physical Attack", ARXIV.ORG, CORNELL UNIVERSITY LIBRARY, 201 OLIN LIBRARY CORNELL UNIVERSITY ITHACA, NY 14853, 28 October 2018 (2018-10-28), XP081463662, DOI: 10.24963/IJCAI.2019/741 * page 1, paragraph 1. - page 4, paragraph 3.3; figure 1 * | 1-14 | |
| A | JUNCHENG B LI ET AL: "Adversarial Music: Real World Audio Adversary Against Wake-word Detection System", ARXIV.ORG, CORNELL UNIVERSITY LIBRARY, 201 OLIN LIBRARY CORNELL UNIVERSITY ITHACA, NY 14853, 31 October 2019 (2019-10-31), XP081545456, * page 3, paragraph 3. - page 7, paragraph 3.5 * | 1-14 | |
| | | | TECHNICAL FIELDS SEARCHED (IPC) |

The present search report has been drawn up for all claims

| Place of search | Date of completion of the search | Examiner |
|---|---|---|
| Munich | 20 September 2021 | Virette, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
......................................................................
& : member of the same patent family, corresponding
document

EPO FORM 1503 03.82 (P04C01)

EP 4 071 754 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Exploiting the gap between human and machine speech recognition. **TAVISH VAIDYA ; YUANKAI ZHANG ; MICAH SHERR ; CLAY SHIELDS ; CO-CAINE NOODLES.** 9th USENIX Workshop on Offensive Technologies (WOOT15). SENIX Association, August 2015
- Hidden voice commands. **NICHOLAS CARLINI ; PRATYUSH MISHRA ; TAVISH VAIDYA ; YUANKAI ZHANG ; MICAH SHERR ; CLAY SHIELDS ; DAVID WAGNER ; WENCHAO ZHOU.** 25th USENIX Security Symposium (USENIX Security 16). USENIX Association, August 2016, 513-530
- Audio adversarial examples: Targeted attacks on speech-to-text. **NICHOLAS CARLINI ; DAVID WAGNER.** 2018 IEEE Security and Privacy Workshops (SPW). IEEE, 2018, 1-7
- **LEA SCHÖNHERR ; KATHARINA KOHLS ; STEFFEN ZEILER ; THORSTEN HOLZ ; DOROTHEA KOLOSSA.** Adversarial attacks against automatic speech recognition systems via psychoacoustic hiding. *CoRP,* 2018
- **SHREYA KHARE ; RAHUL ARALIKATTE ; SENTHIL MANI.** *Adversarial black-box attacks on automatic speech recognition systems using multi-objective evolutionary optimization,* 2018
- Backdoor: Making microphones hear inaudible sounds. **NIRUPAM ROY ; HAITHAM HASSANIEH ; ROMIT ROY CHOUDHURY.** Proceedings of the 15th Annual International Conference on Mobile Systems, Applications, and Services, MobiSys '17. Association for Computing Machinery, 2017, 2-14
- Dolphinattack: Inaudible voice commands. **GUOMING ZHANG ; CHEN YAN ; XIAOYU JI ; TIANCHEN ZHANG ; TAIMIN ZHANG ; WENYUAN XU.** Proceedings of the 2017 ACM SIGSAC Conference on Computer and Communications Security, CCS'17. Association for Computing Machinery, 2017, 103-117
- **MCAULEY ; FARINAZ KOUSHANFAR.** *Universal adversarial perturbations for speech recognition systems,* 2019
- **SAJJAD ABDOLI ; LUIZ G HAFEMANN ; JEROME RONY ; ISMAIL BEN AYED ; PATRICK CARDINAL ; ALESSANDRO L KOERICH.** *Universal adversarial audio perturbations,* 2019
- **YAO QIN ; NICHOLAS CARLINI ; IAN GOODFELLOW ; GARRISON COTTRELL ; COLIN RAFFEL.** *Imperceptible, robust, and targeted adversarial examples for automatic speech recognition,* 2019
- **JOSEPH SZURLEY ; J. ZICO KOLTER.** *Perceptual based adversarial audio attacks,* 2019
- **MOUSTAFA ALZANTOT ; BHARATHAN BALAJI ; MANI SRIVASTAVA.** *Did you hear that? adversarial examples against automatic speech recognition,* 2018
- Targeted adversarial examples for black box audio systems. **ROHAN TAORI ; AMOG KAMSETTY ; BRENTON CHU ; NIKITA VEMURI.** 2019 IEEE Security and Privacy Workshops (SPW). IEEE, 2019, 15-20
- **PETE WARDEN.** Speech commands: A dataset for limited-vocabulary speech recognition. *CoRR,* 2018
- **FRANK BENTLEY ; LUVOGT CHRIS ; SILVERMAN MAX ; WIRASINGHE RUSHANI ; WHITE BROOKE ; LOTTRJDGE DANIELLE.** Understanding the longterm use of smart speaker assistants. *Proceedings of the ACM on Interactive, Mobile, Wearable and Ubiquitous Technologies,* 2018, vol. 2, 3
- **AWNI HANNUN ; CARL CASE ; JARED CASPER ; BRYAN CATANZARO ; GREG DIAMOS ; ERICH ELSEN ; RYAN PRENGER ; SANJEEV SATHEESH ; SHUBHO SENGUPTA ; ADAM COATES et al.** *Deep speech: Scaling up end-to-end speech recognition,* 2014
- **KENNETH HEAFIELD.** Faster and smaller language model queries. *Proceedings of the sixth workshop on statistical machine translation,* 2011, 187-197
- **LORENLUGOSCH ; MIRCO RAVANELLI ; PATRICKLGNOTO ; VIKRANTSINGHTOMAR ; YOSHUA BENGIO.** *Speech model pre-training for end-to-end spoken language understanding,* 2019
- Speech commands: A dataset for limited-vocabulary speech recognition. *CoRR,* 2018